# EUROPEAN PATENT APPLICATION

(11) **EP 4 471 885 A1**
(43) Date of publication of application: **04.12.2024**
(21) Application number: 23746720.4
(22) Date of filing: 16.01.2023
(51) Int. Cl.: H01M 4/13, H01M 4/131, H01M 4/36, H01M 4/505, H01M 4/525, H01M 10/052, H01M 10/0587

(54) **NON-AQUEOUS ELECTROLYTE SECONDARY BATTERY**

(30) Priority: 28.01.2022 JP 2022011746
(71) Applicant: Panasonic Energy Co., Ltd., Osaka 570-8511 (JP)
(72) Inventor: MORITA Koki, Kadoma-shi, Osaka 571-0057 (JP)
(74) Representative: Novagraaf International SA
(86) International application number: PCT/JP2023/000960
(87) International publication number: WO 2023/145506

(57) **Abstract**

In a non-aqueous electrolyte secondary battery according to the present disclosure, a positive electrode has a positive electrode current collector, a positive electrode mixture layer formed on the surface of the positive electrode current collector, and a positive electrode exposed section at which the positive electrode current collector is exposed.
The positive electrode exposed section contacts only one end portion among the two width-direction end portions of the positive electrode. A positive electrode tab is connected to the positive electrode exposed section and is drawn out from the one end section. When the positive electrode mixture layer is divided into a first positive electrode mixture layer that is lined up with the positive electrode exposed section in the longitudinal direction of the positive electrode and a second positive electrode mixture layer that is adjacent to the positive electrode exposed section and the first positive electrode mixture layer in the width direction of the positive electrode, the discharge capacity of a first positive electrode active substance included in the first positive electrode mixture layer per unit mass is less than the discharge capacity of a second positive electrode active substance included in the second positive electrode mixture layer per unit mass, and the discharge capacity of the first positive electrode mixture layer per unit area is less than the discharge capacity of the second positive electrode mixture layer per unit area.

## Description

### TECHNICAL FIELD

The present disclosure relates to a non-aqueous electrolyte secondary battery.

### BACKGROUND ART

A non-aqueous electrolyte secondary battery houses an electrode assembly in which a positive electrode and a negative electrode are wound with a separator interposed therebetween. The positive electrode has a metallic positive electrode current collector, a positive electrode mixture layer formed on a surface of the positive electrode current collector, and a positive electrode exposed portion where the positive electrode current collector is exposed. The positive electrode mixture layer includes a positive electrode active material that may reversibly occlude and release Li ions, such as a lithium composite oxide. To a positive electrode exposed portion, a positive electrode tab for connecting the positive electrode and a terminal of the battery is connected.

Patent Literature 1 discloses art that, in an electrode assembly in which a positive electrode exposed portion is formed on one end in a width direction of a positive electrode, a thickness of a first region of a positive electrode mixture layer aligned in a longitudinal direction of the positive electrode exposed portion and the positive electrode is set to be smaller than a thickness of the other region (second region) of the positive electrode to inhibit winding deviation.

### CITATION LIST

### PATENT LITERATURE

PATENT LITERATURE 1: International Publication No. WO2017/077698

### SUMMARY

The battery has been required to have further higher capacity in recent years. However, a positive electrode including a positive electrode active material with a high capacity and a negative electrode including a negative electrode active material with a high capacity tend to expand due to repeated charge and discharge. Thus, a surface pressure may increase with the charge-discharge cycle derived from a positive electrode tab to cause difficulty in uniform charge and discharge in an entirety of the positive electrode. The art described in Patent Literature 1 does not consider the increase in the surface pressure due to the charge-discharge cycle, and still has room for improvement.

It is an advantage of the present disclosure to provide a non-aqueous electrolyte secondary battery having a high capacity and excellent charge-discharge cycle characteristics.

A non-aqueous electrolyte secondary battery of an aspect of the present disclosure is a non-aqueous electrolyte secondary battery comprising: an electrode assembly in which a positive electrode and a negative electrode are wound with a separator interposed therebetween; an electrolytic solution; and a cylindrical exterior that houses the electrode assembly and the electrolytic solution, wherein the positive electrode has a positive electrode current collector, a positive electrode mixture layer formed on a surface of the positive electrode current collector, and a positive electrode exposed portion where the positive electrode current collector is exposed; the positive electrode exposed portion is contacted with only one end among both ends in a width direction of the positive electrode; a positive electrode tab is connected with the positive electrode exposed portion and drawn out from the one end; and when the positive electrode mixture layer is divided into a first positive electrode mixture layer aligned with the positive electrode exposed portion in a longitudinal direction of the positive electrode, and a second positive electrode mixture layer adjacent to the positive electrode exposed portion and the first positive electrode mixture layer in the width direction of the positive electrode, a discharge capacity per unit mass of a first positive electrode active material included in the first positive electrode mixture layer is smaller than a discharge capacity per unit mass of a second positive electrode active material included in the second positive electrode mixture layer, and a discharge capacity per unit area of the first positive electrode mixture layer is smaller than a discharge capacity per unit area of the second positive electrode mixture layer.

According to the non-aqueous electrolyte secondary battery of the present disclosure, a battery capacity and charge-discharge cycle characteristics can be improved.

### BRIEF DESCRIPTION OF DRAWING

FIG. 1 is a vertical sectional view of a cylindrical secondary battery of an example of an embodiment.
FIG. 2 is a front view illustrating a positive electrode according to an example of an embodiment with an unwound state.

### DESCRIPTION OF EMBODIMENTS

Hereinafter, an example of an embodiment of a non-aqueous electrolyte secondary battery according to the present disclosure will be described in detail with reference to the drawings. In the following description, specific shapes, materials, values, directions, and the like, which are examples for facilitating understanding of the present disclosure, may be appropriately modified with specifications of non-aqueous electrolyte secondary batteries. The description " a numerical value (A) to a numerical value (B)" herein means greater than or equal to the value (A) and less than or equal to the value (B).

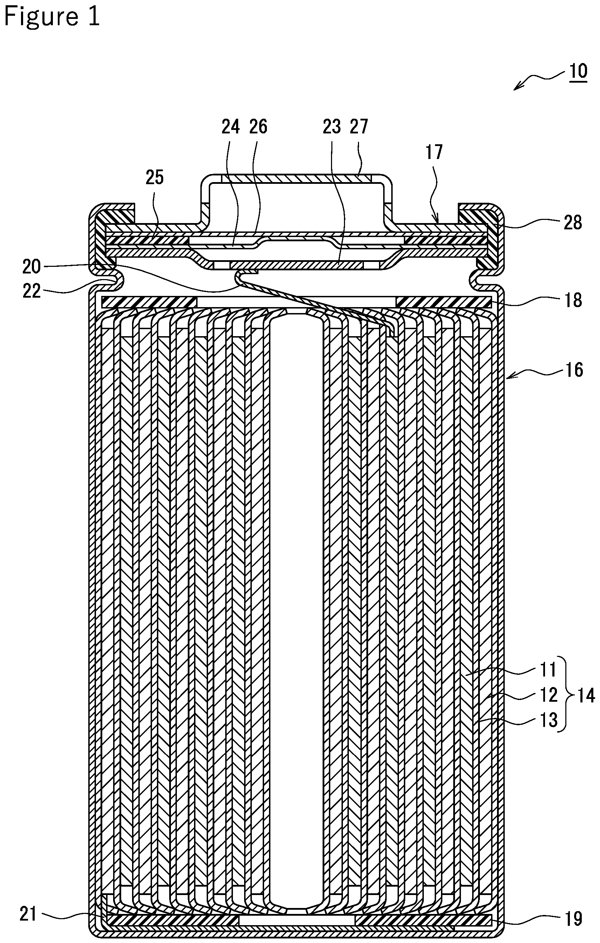

FIG. 1 is a vertical sectional view of a cylindrical secondary battery 10 of an example of an embodiment. In the secondary battery 10 illustrated in FIG. 1, an electrode assembly 14 and an electrolytic solution (not illustrated) are housed in an exterior 16. Hereinafter, for convenience of description, a direction along an axial direction of the exterior 16 will be described as "the vertical direction or the upper-lower direction", a side of a sealing assembly 17 will be described as "the upper side", and a side of a bottom of the exterior 16 will be described as "the lower side".

As a non-aqueous solvent (organic solvent) of the electrolytic solution, carbonates, lactones, ethers, ketones, esters, and the like may be used, and two or more of these solvents may be mixed for use. When two or more of the solvents are mixed for use, a mixed solvent including a cyclic carbonate and a chain carbonate is preferably used. For example, ethylene carbonate (EC), propylene carbonate (PC), butylene carbonate (BC), or the like may be used as the cyclic carbonate, and dimethyl carbonate (DMC), ethyl methyl carbonate (EMC), diethyl carbonate (DEC), or the like may be used as the chain carbonate. As the esters, carbonate esters such as methyl acetate (MA) and methyl propionate (MP) are preferably used. The non-aqueous solvent may contain a halogen-substituted derivative in which hydrogen atoms of these solvents are at least partially substituted with a halogen atom such as fluorine. As the halogen-substituted derivative, fluoroethylene carbonate (FEC), methyl fluoropropionate (FMP), and the like are preferably used, for example. As an electrolyte salt in the electrolytic solution, LiPF₆, LiBF₄, LiCF₃SO₃, lithium bis(fluorosulfonyl)imide, lithium bis(trifluoromethanesulfonyl)imide, and the like, and a mixture thereof may be used. The amount of the electrolyte salt to be dissolved in the non-aqueous solvent is, for example, greater than or equal to 0.5 mol/L and less than or equal to 2.0 mol/L.

The electrode assembly 14 has a wound structure in which a positive electrode 11 and a negative electrode 12 are wound with a separator 13 interposed therebetween. All of the positive electrode 11, the negative electrode 12, and the separator 13 have an elongated band-shape, and are spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than the positive electrode 11 and the negative electrode 12, and disposed to sandwich the positive electrode 11. At a substantial center in the longitudinal direction of the positive electrode 11, a positive electrode tab 20 is connected by welding or the like. At an end on an outer side of winding of the negative electrode 12, a negative electrode tab 21 is connected by welding or the like.

Insulating plates 18 and 19 are disposed on the upper and lower sides of the electrode assembly 14, respectively. In the example illustrated in FIG. 1, the positive electrode tab 20 extends through a through hole of the insulating plate 18 toward the side of the sealing assembly 17, and the negative electrode tab 21 expands through an outside of the insulating plate 19 toward a bottom of the exterior 16. The positive electrode tab 20 is connected to a lower face of a filter 23 of the sealing assembly 17 by welding or the like, and a cap 27, which is a top plate of the sealing assembly 17 electrically connected to the filter 23, becomes a positive electrode terminal. The negative electrode tab 21 is connected to a bottom inner face of the exterior 16 by welding or the like, and the exterior 16 becomes a negative electrode terminal.

As noted above, the exterior 16 is a bottomed cylindrical metallic container having an opening at one side in an axial direction. A gasket 28 is provided between the exterior 16 and the sealing assembly 17 to achieve sealability inside the battery and insulability between the exterior 16 and the sealing assembly 17. On the exterior 16, a grooved portion 22 in which a part of a side wall thereof projects inward for supporting the sealing assembly 17 is formed. The grooved portion 22 is preferably formed in a circular shape along a circumferential direction of the exterior 16, and supports the sealing assembly 17 with the upper surface thereof. The sealing assembly 17 is fixed on the upper part of the exterior 16 with the grooved portion 22 and with an end of the opening of the exterior 16 caulked to the sealing assembly 17.

The sealing assembly 17 has a structure in which the filter 23, a lower vent member 24, an insulating member 25, an upper vent member 26, and the cap 27 are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at each of middle portions thereof, and the insulating member 25 is interposed between circumferences thereof. If the internal pressure increases due to abnormal heat generation of the battery, the lower vent member 24 is deformed so as to push the upper vent member 26 up toward the cap 27 side and breaks, resulting in cutting off of an electrical pathway between both the lower vent member 24 and the upper vent member 26. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically the positive electrode 11, will be described in detail.

### [Positive Electrode]

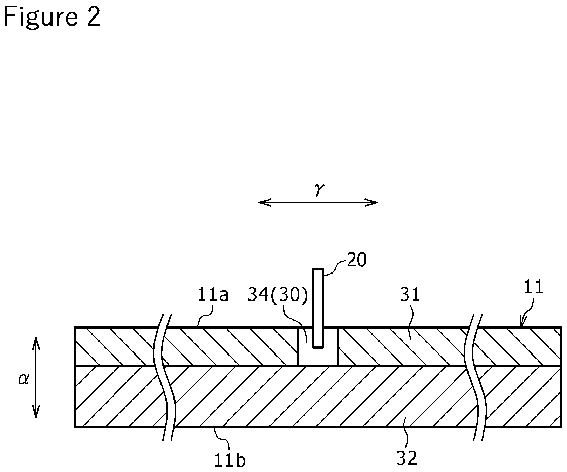

FIG. 2 is a front view illustrating the positive electrode 11 with an unwound state. A width direction α of the positive electrode 11 is the axial direction of the electrode assembly 14, and a longitudinal γ of the positive electrode 11 is a winding direction of the electrode assembly 14.

The positive electrode 11 has: a positive electrode current collector 30; positive electrode mixture layers 31 and 32 formed on a surface of the positive electrode current collector 30; and a positive electrode exposed portion 34 where the positive electrode current collector 30 is exposed. The positive electrode mixture layers 31 and 32 may be divided into a first positive electrode mixture layer 31 and a second positive electrode mixture layer 32, as described later. The positive electrode mixture layers 31 and 32 are preferably formed on both surfaces of the positive electrode current collector 30. The positive electrode exposed portion 34 is a portion not covered with the positive electrode mixture layers 31 and 32 in the surface of the positive electrode current collector 30.

An outer shape of the positive electrode current collector 30 is a band, and substantially coincides with an outer shape of the positive electrode 11. For the positive electrode current collector 30, a foil of a metal stable within a potential range of the positive electrode, such as aluminum, a film in which such a metal is disposed on a surface layer, or the like may be used. A thickness of the positive electrode current collector 30 is, for example, greater than or equal to 10 µm and less than or equal to 30 µm .

The positive electrode exposed portion 34 is contacted only with one end 11a among both ends 11a and 11b in the width direction α of the positive electrode 11. The positive electrode exposed portion 34 has, for example, a rectangular shape, and has a terminal in the width direction α of the positive electrode 11. A length of the positive electrode exposed portion 34 in the width direction α of the positive electrode 11 (a length from the one end 11a and the terminal) is, for example, greater than or equal to 5 mm and less than or equal to 20 mm. This configuration may stably connect the positive electrode tab 20 with the positive electrode exposed portion 34 while increasing the capacity of the battery. The positive electrode exposed portion 34 is preferably provided on both surfaces of the positive electrode 11 so as to be stacked in the thickness direction of the positive electrode 11.

The positive electrode tab 20 is connected to the positive electrode exposed portion 34 and drawn out from the one end 11a. The positive electrode exposed portion 34 is preferably provided at a substantial center in the longitudinal direction γ of the positive electrode 11 from the viewpoint of current collectability. The positive electrode exposed portion 34 provided at such a position and connected to the positive electrode tab 20 allows the positive electrode tab 20 to be disposed with protruding upward from the end surface in the axial direction at a substantially middle position in the radial direction of the electrode assembly 14 when wound as the electrode assembly 14. A plurality of the positive electrode exposed portions 34 may be present in the longitudinal direction γ of the positive electrode 11.

The positive electrode mixture layers 31 and 32 include, for example, a positive electrode active material, a conductive agent, and a binder. A content of the positive electrode active material in the positive electrode mixture layers 31 and 32 is, for example, greater than or equal to 80 mass% and less than or equal to 99 mass% based on the total mass of the positive electrode mixture layers 31 and 32. The content of the positive electrode active material in the positive electrode mixture layer 31 and the content of the positive electrode active material in the positive electrode mixture layer 32 may be different, but preferably substantially equal.

The positive electrode mixture layers 31 and 32 may be divided into a first positive electrode mixture layer 31 aligned with the positive electrode exposed portion 34 in the longitudinal direction γ of the positive electrode 11, and a second positive electrode mixture layer 32 adjacent to the positive electrode exposed portion 34 and the first positive electrode mixture layer in the width direction α of the positive electrode 11. A discharge capacity per unit mass of a first positive electrode active material included in the first positive electrode mixture layer 31 is smaller than a discharge capacity per unit mass of a second positive electrode active material included in the second positive electrode mixture layer 32, and a discharge capacity per unit area of the first positive electrode mixture layer 31 is smaller than a discharge capacity per unit area of the second positive electrode mixture layer 32. This configuration may inhibit increase in the surface pressure derived from the positive electrode tab 20 to improve the battery capacity and the charge-discharge cycle characteristics.

The discharge capacity per unit mass of the first positive electrode active material is, for example, greater than or equal to 200 mAh/g and less than or equal to 215 mAh/g, and the discharge capacity per unit area of the first positive electrode mixture layer 31 is, for example, greater than or equal to 12.0 mAh/cm² and less than or equal to 13.0 mAh/cm².

The discharge capacity per unit mass of the second positive electrode active material is, for example, greater than or equal to 205 mAh/g and less than or equal to 225 mAh/g, and the discharge capacity per unit area of the second positive electrode mixture layer 32 is, for example, greater than or equal to 12.4 mAh/cm² and less than or equal to 13.7 mAh/cm².

The first positive electrode active material includes, for example, a lithium composite oxide represented by the general formula LiₐNiₓM_{y}O_{2-b}, wherein 0≤a≤1.05, 0.6≤x≤0.92, 0.08≤y≤0.4, 0≤b≤0.05, x+y=1, and M represents at least one element selected from the group consisting of Al, Co, Mn, Fe, Ti, Si, Nb, Mo, W, and Zn.

The second positive electrode active material includes, for example, lithium composite oxide represented by the general formula Li_{c}NiₚN_{q}O_{2-d}, wherein 0≤c≤1.05, 0.7≤p≤0.95, 0.05≤q≤0.3, 0≤d≤0.05, p+q=1, and N represents at least one element selected from the group consisting of Al, Co, Mn, Fe, Ti, Si, Nb, Mo, W, and Zn.

"a" and "c", which indicate the number of moles of Li per mole of the lithium composite oxide, are greater than or equal to 0 and less than or equal to 1.05, which change by charge and discharge. "a" and "c" during charge is, for example, greater than or equal to 0.95 and less than or equal to 1.05, and preferably 1.

"x" and "p", which indicate a proportion of Ni (Ni content rate) relative to the total number of moles of metal elements in the lithium composite oxide excluding Li, preferably satisfy x<p. "x" is preferably greater than or equal to 0.6 and less than or equal to 0.92, and more preferably greater than or equal to 0.8 and less than or equal to 0.92. "p" is preferably greater than or equal to 0.7 and less than or equal to 0.95, and more preferably greater than or equal to 0.85 and less than or equal to 0.95.

"y" and "q", which indicate a proportion of M and N (M and N each represent at least one element selected from the group consisting of Al, Co, Mn, Fe, Ti, Si, Nb, Mo, W, and Zn) relative to the total number of moles of metal elements in the lithium-transition metal composite oxide excluding Li, preferably satisfy y>q. "y" is preferably greater than or equal to 0.08 and less than or equal to 0.4, and more preferably greater than or equal to 0.08 and less than or equal to 0.2. "q" is preferably greater than or equal to 0.05 and less than or equal to 0.3, and more preferably greater than or equal to 0.05 and less than or equal to 0.15.

The first positive electrode mixture layer 31 may include a positive electrode active material other than the above lithium oxide represented by the general formula LiₐNiₓM_{y}O_{2-b}. The second positive electrode mixture layer 32 may include a positive electrode active material other than the above lithium oxide represented by the general formula Li_{c}NiₚM_{q}O_{2-d}.

A thickness of each of the first positive electrode mixture layer 31 and the second positive electrode mixture layer 32 is, for example, greater than or equal to 10 µm and less than or equal to 150 µm on one side of the positive electrode current collector 30. The thickness of the positive electrode mixture layer 31 and the thickness of the positive electrode mixture layer 32 may be substantially equal.

Examples of the conductive agent included in the positive electrode mixture layers 31, 32 include carbon-based particles such as carbon black (CB), acetylene black (AB), Ketjenblack, carbon nanotube (CNT), graphene, and graphite. These may be used singly, or in combination of two or more.

Examples of the binder included in the positive electrode mixture layers 31, 32 include fluororesins such as polytetrafluoroethylene (PTFE) and polyvinylidene fluoride (PVDF), polyacrylonitrile (PAN), polyimide resins, acrylic resins, and polyolefin resins. These may be used singly, or in combination of two or more.

A method for producing the positive electrode 11 is not particularly limited, but the positive electrode 11 may be produced as follows, for example.
(1) A first positive electrode mixture slurry for the first positive electrode mixture layer 31 and a second positive electrode mixture slurry for the second positive electrode mixture layer 32 are each produced. Both the first positive electrode mixture slurry and the second positive electrode mixture slurry include, for example, the positive electrode active material, the conductive agent, and the binder.
(2) The first positive electrode mixture slurry and the second positive electrode mixture slurry are applied in a stripe shape along the longitudinal direction γ of the positive electrode current collector 30 so as to be adjacent to each other in the width direction α. At this time, the positive electrode exposed portion 34 is provided by, for example, intermittent application in which the first positive electrode mixture slurry is not applied on a part of the positive electrode current collector 30.
(3) The applied slurry is dried, and then the coating film is rolled with a roller to produce the positive electrode 11.

### [Negative Electrode]

The negative electrode 12 has: a negative electrode current collector; a negative electrode mixture layer formed on a surface of the negative electrode current collector; and a negative electrode exposed portion where the negative electrode current collector is exposed, for example. An outer shape of the negative electrode current collector is a band, and substantially coincides with the outer shape of the negative electrode 12. For the negative electrode current collector, a foil of a metal stable within a potential range of the negative electrode, such as copper, a film in which such a metal is disposed on a surface layer, or the like may be used. A thickness of the negative electrode current collector is, for example, greater than or equal to 5 µm and less than or equal to 30 µm.

The negative electrode mixture layer is preferably formed on both surfaces of the negative electrode current collector. A thickness of the negative electrode mixture layer is, for example, greater than or equal to 10 µm and less than or equal to 150 µm on one side of the negative electrode current collector. The negative electrode mixture layer includes, for example, a negative electrode active material and a binder. A content of the negative electrode active material in the negative electrode mixture layer is, for example, greater than or equal to 80 mass% and less than or equal to 99 mass% based on the total mass of the negative electrode mixture layer. The negative electrode may be produced by, for example, applying a negative electrode mixture slurry including the negative electrode active material, the binder, and the like on both the surfaces of the negative electrode current collector, drying the coating, and subsequently rolling the coating by using a roller or the like. The negative electrode exposed portion is provided by, for example, intermittent application in which the negative electrode mixture slurry is not applied on a part of the negative electrode current collector.

The negative electrode active material included in the negative electrode mixture layer is not particularly limited as long as it may reversibly occlude and release lithium ions, and a carbon material such as graphite is typically used. The graphite may be any of: a natural graphite such as flake graphite, massive graphite, and amorphous graphite; and an artificial graphite such as massive artificial graphite and graphitized mesophase-carbon microbead. As the negative electrode active material, a metal that forms an alloy with Li, such as Si or Sn, a metal compound including Si, Sn, or the like, a lithium-titanium composite oxide, or the like may be used. For example, a silicon oxide represented by SiOₓ ("x" is greater than or equal to 0.5 and less than or equal to 1.6), a silicon-containing material in which Si fine particles are dispersed in a lithium silicate phase represented by Li_{2y}SiO_{(2+y)} (0<y<2), a silicon-containing material in which Si fine particles are dispersed in a carbon phase, or the like may be used in combination with graphite.

Examples of the binder included in the negative electrode mixture layer include styrene-butadiene rubber (SBR), nitrile-butadiene rubber (NBR), carboxymethylcellulose (CMC) or a salt thereof (which may be CMC-Na, CMC-K, CMC-NH₄, and the like, or a partially neutralized salt), polyacrylic acid (PAA) or a salt thereof (which may be PAA-Na, PAA-K, and the like, or a partially neutralized salt), and polyvinyl alcohol (PVA). These materials may be used singly, or in combination of two or more.

### [Separator]

The separator 13 separates the positive electrode 11 and the negative electrode 12 each other. For the separator 13, a porous sheet having an ion permeation property and an insulation property, or the like is used, for example. Specific examples of the porous sheet include a fine porous thin film, a woven fabric, and a nonwoven fabric. As a material of the separator, an olefin resin such as polyethylene and polypropylene, cellulose, and the like are preferable. The separator 13 may be a laminate having a cellulose fiber layer and a thermoplastic resin fiber layer such as an olefin resin. The separator 13 may be a multilayer separator including a polyethylene layer and a polypropylene layer, and a separator in which a material such as an aramid resin or ceramic is applied on a surface of the separator 13 may also be used.

### EXAMPLES

Hereinafter, the present disclosure will be further described with Examples, but the present disclosure is not limited to these Examples.

### [Production of Positive Electrode]

As a first positive electrode active material, a lithium composite oxide represented by LiNi_{0.87}Co_{0.09}Al_{0.04}O₂ was used. The first positive electrode active material had a discharge capacity per unit mass of 210 mAh/g. The first positive electrode active material, acetylene black (AB), and polyvinylidene fluoride (PVDF) were mixed at a mass ratio of 100:1:0.9, and kneaded while adding N-methylpyrrolidone (NMP) to prepare a first positive electrode mixture slurry. As a second positive electrode active material, a lithium composite oxide represented by LiNi_{0.91}Co_{0.04}Al_{0.05}O₂ was used. The second positive electrode active material had a discharge capacity per unit mass of 213 mAh/g. The second positive electrode active material, acetylene black (AB), and polyvinylidene fluoride (PVDF) were mixed at a mass ratio of 100:1:0.9, and kneaded while adding N-methylpyrrolidone (NMP) to prepare a second positive electrode mixture slurry.

On a band-shaped positive electrode current collector composed of aluminum foil, the first positive electrode mixture slurry and the second positive electrode mixture slurry were applied in a stripe shape in a longitudinal direction, and dried. The application and drying were similarly performed on the back surface. The dried coating film was compressed by using a roller, and then cut to a predetermined electrode size to produce a positive electrode in which a positive electrode mixture layer was formed on both surfaces of the positive electrode current collector. The positive electrode mixture layer had a form same as in FIG. 2, and formed by applying the first positive electrode mixture slurry on the first positive electrode mixture layer and applying the second positive electrode mixture slurry on the second positive electrode mixture layer. The first positive electrode mixture layer had a discharge capacity per unit area of 12.7 mAh/cm², and the second positive electrode mixture layer had a discharge capacity per unit area of 12.9 mAh/cm². In the width direction of the positive electrode, the first positive electrode mixture layer had a length of 10 mm, and the second positive electrode mixture layer had a length of 50 mm. At a substantial center in the longitudinal direction of the positive electrode, a positive electrode exposed portion was provided by intermittent application of the first positive electrode mixture slurry, and a positive electrode tab made of aluminum was welded with the positive electrode exposed portion.

### [Production of Negative Electrode]

Mixing of 98 parts by mass of graphite, 1 part by mass of sodium salt of carboxymethylcellulose (CMC-Na), and 1 part by mass of styrene-butadiene rubber (SBR) was performed, and an appropriate amount of water was added to prepare a negative electrode mixture slurry. Then, the negative electrode mixture slurry was applied on both surfaces of a band-shaped negative electrode current collector composed of copper foil having a thickness of 8 µm so as to form a negative electrode exposed portion where the negative electrode current collector was exposed at an end on a terminal winding side. The resulting coating film was dried, then rolled, and cut to a predetermined electrode size to produce a negative electrode in which a negative electrode mixture layer was formed on both surfaces of the negative electrode current collector. A negative electrode tab made of nickel was welded with the negative electrode exposed portion.

### [Preparation of Electrolytic Solution]

Into a mixed solvent composed of ethylene carbonate (EC) and ethyl methyl carbonate (EMC) (EC:EMC=1:3 in a volume ratio), lithium hexafluorophosphate (LiPF₆) was dissolved so that the concentration was 1.0 mol/L to prepare an electrolytic solution.

### [Production of Secondary Battery]

The above positive electrode and negative electrode were wound with a fine porous separator (composite film of polyethylene and polypropylene) having a thickness of 20 µ interposed therebetween to produce an electrode assembly. An insulating plate was each disposed on upper and lower sides of the electrode assembly, and the electrode assembly was housed in a cylindrical exterior. The exterior had an outer shape of 18 mm in diameter and 65 mm in height. Then, the negative electrode tab was welded with a bottom of the exterior, and the positive electrode tab was welded with a sealing assembly. Thereafter, 5.2 mL of the electrolytic solution was injected inside the exterior by a pressure-reducing method, and then an opening of an end of the exterior was sealed via a gasket so as to be caulked with the sealing assembly to produce a secondary battery.

### [Evaluation of Battery Capacity and Capacity Retention]

Under an environment at a temperature of 25°C, the secondary battery was charged at a constant current of 0.3 It until 4.2 V, and then charged at a constant voltage of 4.2 V until 0.05 It. Thereafter, the secondary battery was discharged at a constant current of 0.2 It until 2.5 V. This charge and discharge were specified as one cycle, the charge and discharge were performed with 300 cycles, and a capacity retention was determined with the following formula. The discharge capacity at the 1st cycle was specified as the battery capacity. Capacity retention = (Discharge capacity at 300th cycle/Discharge capacity at 1st cycle) × 100

### [Evaluation of Expansion Coefficient of Electrode Assembly]

In the production of the secondary battery, a thickness of the laminate composed of the positive electrode, the negative electrode, and two separators was measured and specified as an initial laminate thickness. A thickness of the laminate in the electrode assembly taken out of the secondary battery after the 300 cycles was measured again and specified as a laminate thickness after the cycle. The expansion coefficient of the electrode assembly was determined with the following formula. Expansion coefficient of electrode assembly = (Laminate thickness after cycle - Initial laminate thickness)/Initial laminate thickness

### <Example 2>

A secondary battery was produced and evaluated in the same manner as in Example 1 except that, in the production of the positive electrode, a lithium composite oxide represented by LiNi_{0.82}Co_{0.15}Al_{0.03}O₂ was used as the first positive electrode active material. The first positive electrode active material had a discharge capacity per unit mass of 203 mAh/g, and the first positive electrode mixture layer had a discharge capacity per unit area of 12.3 mAh/cm².

### <Example 3>

A secondary battery was produced and evaluated in the same manner as in Example 1 except that, in the production of the positive electrode, a lithium composite oxide represented by LiNi_{0.82}Co_{0.15}Al_{0.03}O₂ was used as the first positive electrode active material, and a lithium composite oxide represented by LiNi_{0.87}Co_{0.09}Al_{0.04}O₂ was used as the second positive electrode active material.

### <Comparative Example 1>

A secondary battery was produced and evaluated in the same manner as in Example 1 except that, in the production of the positive electrode, the lithium composite oxide represented by LiNi_{0.91}Co_{0.04}Al_{0.05}O₂, which was same as the second positive electrode active material, was used as the first positive electrode active material.

### <Comparative Example 2>

A secondary battery was produced and evaluated in the same manner as in Example 1 except that, in the production of the positive electrode, a lithium composite oxide represented by LiNi_{0.82}Co_{0.15}Al_{0.03}O₂ was used as the first positive electrode active material and the second positive electrode active material.

Table 1 summarizes the evaluation results of the secondary batteries of Examples and Comparative Examples. In Table 1, the battery capacity and the expansion coefficient of the electrode assembly in Examples 1 to 3 and Comparative Example 2 are values relative to each of the battery capacity and expansion coefficient of the electrode assembly in Comparative Example 1 being 100. Table 1 also shows the discharge capacities per unit mass of the first positive electrode active material and the second positive electrode active material, and the discharge capacities per unit area of the first positive electrode mixture layer and the second positive electrode mixture layer.

**[Table 1]**

| | First positive electrode mixture layer | | Second positive electrode mixture layer | | Evaluation results | | |
|---|---|---|---|---|---|---|---|
| | Unit discharge capacity of active material [mAh/g] | Unit discharge capacity of mixture layer [mAh/cm²] | Unit discharge capacity of active material [mAh/g] | Unit discharge capacity of mixture layer [mAh/cm²] | Battery capacity | Expansion coefficient of electrode assembly | Capacity retention [%] |
| Example 1 | 210 | 12.7 | 213 | 12.9 | 99.8 | 90 | 85 |
| Example 2 | 203 | 12.3 | 213 | 12.9 | 99.3 | 87 | 86 |
| Example 3 | 203 | 12.3 | 210 | 12.7 | 98.1 | 82 | 84 |
| Comparative Example 1 | 213 | 12.9 | 213 | 12.9 | 100 | 100 | 81 |
| Comparative Example 2 | 203 | 12.3 | 203 | 12.3 | 95.3 | 79 | 90 |

The secondary batteries of Examples 1 to 3 exhibit both of a high battery capacity and a high capacity retention, which may achieve both of increase in the capacity and improvement of the cycle characteristics. Meanwhile, the secondary batteries of Comparative Examples 1 and 2 fail to achieve increase in the capacity and improvement of the cycle characteristics at the same time.

### REFERENCE SIGNS LIST

10 Secondary battery, 11 Positive electrode, 11a One end, 11b Other end, 12 Negative electrode, 13 Separator, 14 Electrode assembly, 16 Exterior, 17 Sealing assembly, 18, 19 Insulating plate, 20 Positive electrode tab, 21 Negative electrode tab, 22 Grooved portion, 23 Filter, 24 Lower vent member, 25 Insulating member, 26 Upper vent member, 27 Cap, 28 Gasket, 30 Positive electrode current collector, 31 First positive electrode mixture layer, 32 Second positive electrode mixture layer, 34 Positive electrode exposed portion, α width direction, γ longitudinal direction

## Claims

1. A non-aqueous electrolyte secondary battery, comprising:
an electrode assembly in which a positive electrode and a negative electrode are wound with a separator interposed therebetween;
an electrolytic solution; and
a cylindrical exterior that houses the electrode assembly and the electrolytic solution, wherein
the positive electrode has a positive electrode current collector, a positive electrode mixture layer formed on a surface of the positive electrode current collector, and a positive electrode exposed portion where the positive electrode current collector is exposed,
the positive electrode exposed portion is contacted with only one end among both ends in a width direction of the positive electrode,
a positive electrode tab is connected with the positive electrode exposed portion and drawn out from the one end, and
when the positive electrode mixture layer is divided into a first positive electrode mixture layer aligned with the positive electrode exposed portion in a longitudinal direction of the positive electrode, and a second positive electrode mixture layer adjacent to the positive electrode exposed portion and the first positive electrode mixture layer in the width direction of the positive electrode,
a discharge capacity per unit mass of a first positive electrode active material included in the first positive electrode mixture layer is smaller than a discharge capacity per unit mass of a second positive electrode active material included in the second positive electrode mixture layer, and a discharge capacity per unit area of the first positive electrode mixture layer is smaller than a discharge capacity per unit area of the second positive electrode mixture layer.

2. The non-aqueous electrolyte secondary battery according to claim 1, wherein the discharge capacity per unit mass of the first positive electrode active material is greater than or equal to 200 mAh/g and less than or equal to 215 mAh/g, the discharge capacity per unit area of the first positive electrode mixture layer is greater than or equal to 12.0 mAh/cm² and less than or equal to 13.0 mAh/cm², the discharge capacity per unit mass of the second positive electrode active material is greater than or equal to 205 mAh/g and less than or equal to 225 mAh/g, and the discharge capacity per unit area of the second positive electrode mixture layer is greater than or equal to 12.4 mAh/cm² and less than or equal to 13.7 mAh/cm².

3. The non-aqueous electrolyte secondary battery according to claim 1 or 2, wherein
the first positive electrode active material includes a lithium composite oxide represented by the general formula LiₐNiₓM_{y}O_{2-b}, wherein 0≤a≤1.05, 0.6≤x≤0.92, 0.08≤y≤0.4, 0≤b≤0.05, x+y=1, and M represents at least one element selected from the group consisting of Al, Co, Mn, Fe, Ti, Si, Nb, Mo, W, and Zn, and
the second positive electrode active material includes a lithium composite oxide represented by the general formula Li_{c}NiₚN_{q}O_{2-d}, wherein 0≤c≤1.05, 0.7≤p≤0.95, 0.05≤q≤0.3, 0≤d≤0.05, p+q=1, and N represents at least one element selected from the group consisting of Al, Co, Mn, Fe, Ti, Si, Nb, Mo, W, and Zn.
